# EUROPÄISCHE PATENTSCHRIFT

(11) **EP 1 551 659 B1**
(45) Veröffentlichungstag und Bekanntmachung des Hinweises auf die Patenterteilung: **20.08.2008**
(21) Anmeldenummer: 03753553.1
(22) Anmeldetag: 14.10.2003
(51) Int. Cl.: B60K 6/20, H02K 7/18

(54) **HYBRIDANTRIEB FÜR EIN KRAFTFAHRZEUG**
HYBRID DRIVING SYSTEM FOR A MOTOR VEHICLE
SYSTEME DE PROPULSION HYBRIDE POUR VEHICULE AUTOMOBILE

(30) Priorität: 18.10.2002 DE 10248715
(43) Veröffentlichungstag der Anmeldung: 13.07.2005
(73) Patentinhaber: Bayerische Motoren Werke Aktiengesellschaft, 80809 München (DE)
(72) Erfinder: GRÜNDL, Andreas, 81377 München (DE); HOFFMANN, Bernhard, 82319 Starnberg (DE); RASCH, Reinhard, 82229 Hechendorf (DE); MÖRTL, Friedrich, 97737 Gemünden a. Main (DE); GLONNER, Hans, 85276 Pfaffenhofen (DE); GÖTZ, Georg, 84439 Steinkirchen (DE); MICHAEL, Jörg, 85055 Ingolstadt (DE); KAINDL, Markus, 85296 Rohrbach (DE)
(74) Vertreter: Schmidt, Steffen J.
(86) Internationale Anmeldenummer: PCT/EP2003/011370
(87) Internationale Veröffentlichungsnummer: WO 2004/037594

(56) Entgegenhaltungen:
- EP-A- 1 215 418
- DE-A- 3 231 960
- DE-A- 19 917 295
- FR-A- 2 811 267
- US-A- 4 309 620
- US-A- 5 833 022
- US-A- 5 935 035
- PATENT ABSTRACTS OF JAPAN vol. 018, no. 453 (M-1662), 24. August 1994 (1994-08-24) -& JP 06 144020 A (AQUEOUS RES:KK), 24. Mai 1994 (1994-05-24)
- PATENT ABSTRACTS OF JAPAN vol. 1999, no. 13, 30. November 1999 (1999-11-30) -& JP 11 217025 A (FUJI HEAVY IND LTD), 10. August 1999 (1999-08-10)
- PATENT ABSTRACTS OF JAPAN vol. 1999, no. 02, 26. Februar 1999 (1999-02-26) -& JP 10 309003 A (HINO MOTORS LTD), 17. November 1998 (1998-11-17)

## Beschreibung

### Hintergrund der Erfindung

Die Erfindung betrifft einen Hybridantrieb für ein Kraftfahrzeug, mit einem Verbrennungsmotor und einem Fahrzeuggetriebe mit veränderbarer Übersetzung und einer ersten und einer zweiten, sowohl als Motor als auch als Generator betreibbaren elektrischen Maschine, die jeweils einen Stator und einen Rotor aufweisen, wobei die zweite elektrische Maschine mit einem Eingang des Fahrzeuggetriebes in permanentem Kraftschluß steht, zwischen den elektrischen Maschinen und der Antriebswelle des Verbrennungsmotor jeweils eine schaltbare Kupplung angeordnet ist, und wobei die elektrischen Maschinen über eine elektronische Leistungsansteuerung miteinander und/oder mit einer elektrischen Energiequelle zu verbinden sind.

Elektromotoren als Antriebsmotoren für Kraftfahrzeuge, welche von einer Batterie oder einer bordeigenen Brennstoffzelle mit elektrischer Energie gespeist werden, ermöglichen ein emissionsloses und fast geräuschloses Fahren, wobei sie in ihrer Bauart kompakt sind. Allerdings sind die Fahrleistungen rein elektrisch angetriebener Fahrzeuge aufgrund der begrenzten zur Verfügung stehenden Speicherkapazitäten derzeit gebräuchlicher Batterien stark eingeschränkt, weshalb Elektrofahrzeuge bisher nur in Sonderbereichen Anwendung finden.

Neben rein elektrischen Antriebssystemen sind auch teilelektrische Fahrzeugantriebe bekannt, welche auch als "Hybrid-Antriebe" bezeichnet werden. Diese teilelektrischen Antriebssysteme haben als Antriebsaggregat hauptsächlich einen Verbrennungsmotor, mit dem eine große Leistungsfähigkeit und Reichweite des Kraftfahrzeuges ermöglicht wird. Ergänzend ist wenigstens eine elektrische Maschine zwischen dem Verbrennungsmotor und dem Getriebe angeordnet, welche seriell oder parallel zum Antriebsstrang (zwischen Verbrennungsmotor und Getriebe) angeordnet ist und die Vorteile der Elektroantriebe, wie z. B. eine Bremsenergierückgewinnung und ein emissionsfreies Fahren bietet.

Bei sog. seriellen Hybrid-Antrieben wird in einem Fahrbereich mit begrenzter Leistung rein elektrisch gefahren, d. h. der Verbrennungsmotor und eine der beiden elektrischen Maschinen stehen. Die gesamte benötigte Energie wird aus einer Batterie zugeführt. In einem zweiten Fahrbereich wird mit dem Verbrennungsmotor gefahren, der die zweite, als Generator arbeitende elektrische Maschine antreibt, welche wiederum die Energie für den Fahrmotor im elektrischen Betrieb liefert. Derartige serielle Hybridantriebe arbeiten ohne Kupplungen mit einem ständigen Kraftschluß.

Bei sog. parallelen Hybrid-Antrieben wird mit einem mit einer Getriebeeingangswelle verbundenen Elektromotor rein elektrisch angefahren. Währenddessen steht der Verbrennungsmotor still, der durch eine kraftschlüssige Kupplung von der Getriebeeingangswelle getrennt ist. Bei höherem Leistungsbedarf, z. B. ab einer bestimmten höheren Fahrgeschwindigkeit, wird der Verbrennungsmotor durch das Schließen einer Kupplung gestartet, wobei der Verbrennungsmotor dann als primäre Antriebsquelle dient. Der Elektromotor kann dann als zusätzliche Leistungsquelle oder als Generator zum Laden der Fahrzeugbatterie verwendet werden.

Die DE 199 17 295 A1 zeigt eine Antriebsvorrichtung, die in einem Kraftfahrzeug verwendet wird. Als Antriebsaggregat dient ein Verbrennungsmotor, dessen Antriebsdrehmoment über eine Kurbelwelle auf den Rotor einer als Starter/Generator- System ausgebildeten elektrischen Maschine und das Getriebe übertragen wird. In diesem Fall wird die elektrische Maschine in einem ersten Betriebsmodus zum Starten des Verbrennungsmotors und nach dem Starten des Verbrennungsmotors in einem zweiten Betriebsmodus als Energieversorger für elektrische Verbraucher des Kraftfahrzeuges verwendet. Die Antriebswelle des Verbrennungsmotors dient zur Übertragung des Antriebsdrehmoments über eine Getriebeeingangswelle auf ein nachgeschaltetes Getriebe dient. Die Getriebeeingangswelle ist in der Getriebeglocke des Getriebes gelagert. Die Getriebeglocke dient zudem zur Aufnahme einer Getriebekupplung und einer elektrischen Maschine, die eine oder mehrere ortsfeste Statorwicklungen und einen oder mehrere drehbare Rotoren umfaßt. Die Getriebekupplung ist in einem Kupplungsgehäuse untergebracht, das sich im mittleren Bereich der Getriebeglocke befindet und zudem als Träger für die Rotoren der elektrischen Maschine dient. Damit sind die Rotoren außen auf dem Kupplungsgehäuse angebracht, während die Statorwicklungen ortsfest an der Innenwand der Getriebeglocke befestigt sind. Innerhalb des Rotors der elektrischen Maschine ist eine Mehrscheibenkupplung angeordnet.

Die EP 12 15 418 A1 zeigt eine Schmier- und Kühlanordnung zur Verwendung mit Leistungsaufnahme- und Leistungsbereitstelleinheiten ausgebildet ist. Diese Anordung umgibt ein Getriebe konzentrisch und ist mit dem Gehäuse eines Fahrzeuggetriebes umgeben. Die Anordnung umfasst eine Quelle für unter Druck stehendes Schmier- und Kühlfluid, eine sich quer von dem Getriebegehäuse erstreckende Stegplatte, die einen Außenkranz aufweist, der derart ausgebildet ist, dass er mit dem Getriebegehäuse in Eingriff stehen kann, und eine Austragskammer, die in Verbindung mit der Stegplatte steht und in der Nähe des Außenkranzes angeordnet ist. Eine Fluidverbindungsleitung durchdringt die Stegplatte, um unter Druck stehendes Fluid an die Austragskammer zu fördern, wobei das Fluid außerdem von der Quelle an das konzentrisch umgebene Getriebe gefördert wird. Mehrere Sprühringe haben einen Bauabschnitt, der eine Wand der Austragskammer definiert. Mehrere Öffnungen durchdringen diesen Abschnitt des Sprührings um einen Sprühnebel des Schmier- und Kühlfluides auf in der Nähe des Sprührings angeordnete Leistungsaufnahme- und Leistungsbereitstelleinheiten, abzugeben.

Die DE19629346A1 (= US 5,833,022) zeigt einen Hybridantrieb mit einem Verbrennungsmotor und einer elektrischen Maschine, die in einem mit dem Verbrennungsmotor verbundenem Gehäuse einen Rotor und einen Stator aufweist. Dabei sind der Verbrennungsmotor und die elektrische Maschine mittels einer Reibungskupplung verbindbar. Das Gehäuse hat einen Gehäuseteil aufweist, der die Reibungskupplung und die elektrische Maschine trägt, wobei das Gehäuseteil eine die elektrische Maschine dem Verbrennungsmotor und der Reibungskupplung trennende Zwischenwand hat, deren Wirkung durch den Einsatz von Isolationen zwischen Verbrennungsmotor und der Reibungskupplung und der elektrischen Maschine unterstützt ist.

### Der Erfindung zugrundeliegendes Problem

Der Bauraum in Kraftfahrzeugen, insbesondere in Personen-Kraftfahrzeugen ist sehr begrenzt. Ein wesentlicher Gesichtpunkt ist die einfache Montierbarkeit und die Eignung zur Serienfertigung der oben geschilderten Hybrid-Antriebe.

Der vorliegenden Erfindung liegt die Aufgabe zugrunde, einen Hybridantrieb für ein Kraftfahrzeug zu schaffen, der im Betrieb sicher ist, der kompakt baut, und der einfach zu montieren und zu testen ist.

### Erfindungsgemäße Lösung

Erfindungsgemäß wird diese Aufgabe mit einem Hybrid-Antrieb gemäß den Merkmalen des Patentanspruches 1 gelöst. Dazu sind die beiden elektrischen Maschinen in einem gemeinsamen Gehäuse anzuordnen und einer der Statoren der elektrischen Maschinen ist mit der elektronischen Leistungsansteuerung und/oder dem anderen Stator auf einem gemeinsamen Träger aufgenommen.

Diese Ausgestaltung ermöglicht eine platzsparende modulare Montage mit vorangehender Prüfung der Funktionsfähigkeit der Statoren und deren Zusammenwirken mit der elektronischen Leistungsansteuerung. Ausserdem hatder gemeinsame Träger eine zum Kühlen des Stators / der Statoren bzw. der elektronischen Leistungsansteuerung dienende Kühleinrichtung.

Dies gilt umsomehr, als die elektrischen Maschinen, insbesondere wenn sie als Wechselfeldmaschinen ausgestaltet sind, mit sog. Frequenzumrichtern als elektronische Leistungsansteuerung betrieben werden. Diese Frequenzumrichter enthalten eine der Anzahl der Phasen der elektrischen Maschine entsprechende Anzahl von Halbbrückenanordnungen, die von einer ggf. ebenfalls in die elektronische Leistungsansteuerung eingegliederte Ansteuerelektronik mit Steuersignalen gespeist wird. Damit wird - je nach dem ob die elektrische Maschine als Motor oder als Generator betrieben wird - die elektrische Leistung aus einer wiederaufladbaren Energiequelle entnommen und der elektrischen Maschine entweder für die gewünschte Drehzahl und das gewünschte Drehmoment zugeführt oder der elektrischen Maschine wird die elektrische Leistung entnommen und für nachgeschaltete Verbraucher bzw. die wiederaufladbare Energiequelle in die geforderte Betrags- und Phasenlage umgesetzt. In bisher bekannten Anordnungen sind die Frequenzumrichter separat von den elektrischen Maschinen angeordnet und mit diesen über mehrphasige Leistungskabel verbunden.

Ein Beispiel einer derartigen Konfiguration einer Leistungselektronik für eine elektrische Maschine ist in der DE 42 30 510 A1 beschrieben. Hierbei wird das Konzept verfolgt, die Elektronik in einer Siedebadkühlung anzuordnen, wobei dieser druckdicht gekapselten Anordnung die Stromzuführungen, die Ansteuersignale für die Steuerelektronik etc. über eine zentrale Öffnung im Boden der Kapsel zugeführt werden.

Problematisch ist hierbei vor allem der Verkabelungsaufwand und die durch die Leitungen zwischen der elektrischen Maschine und dem Frequenzumrichter erforderliche elektromagnetische Abschirmung. Außerdem fällt ein erheblicher Bedarf an Leistungssteckverbindern sowohl auf der Seite des Frequenzumrichters als auch auf der Seite der elektrischen Maschine an. Auch die Kühlung der Leistungselektronik des Frequenzumrichters erfordert nennenswerten Aufwand. Ein weiteres Problem besteht darin, dass die Reparatur eines solchen gekapselten Frequenzumrichters praktisch nicht möglich ist ohne die druckdichte Kapsel zu öffnen. Das Verschliessen der Kapsel ist nur mit erheblichem Aufwand möglich. Damit führen selbst geringfügige Defekte an dem gekapselten Frequenzumrichter dazu, dass dieser nur als Ganzes ausgetauscht werden kann.

Die erfindungsgemäße Lösung beschreitet den Weg, die elektrische(n) Maschine(n) bzw. deren Stator(en) und die Ansteuerelektronik auf einem gemeinsamen Träger zu integrieren und durch die gleiche Kühleinrichtung zu kühlen. Mit anderen Worten wird ein tragender Kühlmantel bereitgestellt, der in der Lage ist, sowohl an seiner Innenwand als auch an seiner Aussenwand die Statoren und die Ansteuerelektronik aufzunehmen. Dies spart erheblich Platz und Kosten. Außerdem ist es bei einer ggf. notwendigen Reparatur erheblich einfacher und kostengünstiger lediglich ein oder mehrere defekte Module, und nicht die Ansteuerelektronik als Ganzes auszutauschen. Weiterhin erlaubt die Erfindung, den Abschirmungsaufwand gegen elektromagnetische Störstrahlung erheblich zu reduzieren, da die hochfrequente Leistung führenden Leitungen sehr viel kürzer als bei herkömmlichen - getrennten - Anordnungen sind. Außerdem reduziert sich der Beschaltungsaufwand erheblich, da die bisher üblichen Phasenverteilenschienen auf der Maschinenseite entfallen können.

### Vorteilhafte Weiterbildungen der Erfindung

In einer bevorzugten Ausführungsform der Erfindung hat der Träger einen im wesentlichen hohlzylindrischen Abschnitt, wobei an seiner Innenwand der eine Stator und an seiner Außenwand der andere Stator angeordnet sind. Alternativ dazu können an dem gemeinsamen Träger beide Statoren entweder an seiner Innenwand oder an seiner Außenwand angeordnet sein. Dabei hat der hohlzylindrische Abschnitt des Trägers einen im wesentlichen kreisringförmigen oder polygonringförmigen Querschnitt.

In einer bevorzugten Ausführungsform ist die Kühleinrichtung von Fluidkanälen durchzogen. Diese können die elektrische Maschine entweder ring- oder wendelförmig umgeben oder im wesentlichen koaxial zur Rotationsachse der elektrischen Maschine(n) bzw. zur Mittelachse des Trägers verlaufen.

Die Kühleinrichtung kann in den Träger bereits bei dessen Herstellung integriert werden. Dies ist zum Beispiel bei einem Träger aus (Aluminium)-Druckguß relativ einfach möglich, da hierbei die Kühleinrichtung mit ihren Fluidkanälen an der Wandung des Trägers auf einfache Weise ausgeformt werden kann. Dabei hat die Kühleinrichtung in einer Ausführungsform an ihrer Aussenwand wenigstens eine zu wenigstens einem der Fluidkanäle reichende Öffnung, in die an einem der Module der elektronischen Leistungsansteuerung angeordnete Kühlelemente hineinragen. Diese Kühlelemente können zum Beispiel rippen-, steg-, oder stiftförmig ausgestaltet sein.

Zur Verbesserung der Wärmeableitung sowohl aus der elektrische Maschine als auch von den Modulen der elektronischen Leistungsansteuerung sind die in die Fluidkanäle hineinragenden Kühlelemente so gestaltet, dass sie in dem in den Fluidkanälen strömenden Fluid turbulente Strömungen verursachen. Dies erfolgt zum Beispiel durch quer zur Fluidstrom angeordnete Prallplatten, aufeinander zu oder voneinander weg orientierte Leitschaufeln oder dergl.

Für eine gute elektrische Isolierung und eine gleichzeitige gute thermische Ankopplung der in den Modulen der elektronischen Leistungsansteuerung befindlichen Leistungshalbleiter (MOS-FETs, IGBTs Schottky-Dioden etc.) sind die in die Fluidkanäle hineinragenden Kühlelemente und/oder die Abdeckungen der Module aus Nicht-Eisenmetall, vorzugsweise Kupfer oder Aluminium enthaltendem Material, oder aus Keramik, vorzugsweise aus Aluminiumoxid, Aluminiumnitrid, und/oder Siliziumkarbid enthaltendem Material gebildet.

Um die in den Modulen befindlichen Komponenten der elektronischen Leistungsansteuerung mit den Stator- und/oder Rotorspulen auf möglichst kurzem Wege zu verbinden sind in dem Träger im wesentlichen radial orientierte Leitungen angeordnet, welche von den Stator- und/oder Rotorspulen zu den jeweiligen Modulen der elektronischen Leistungsansteuerung reichen.

Weiterhin sind in oder an dem Träger im wesentlichen entlang des Umfangs orientierte Leitungen angeordnet, welche die jeweiligen Module der elektronischen Leistungsansteuerung miteinander verbinden. Damit können zum einen Ansteuersignale und zum anderen die erforderliche elektrische Leistung an die Module verteilt werden (im Motorbetrieb) bzw. von den einzelnen Modulen abgegriffen werden (im Generatorbetrieb).

Weiterhin kann der Träger an seiner Innenwand und/oder seiner Aussenwand eine Hydraulik-Verteilerplatte insbesondere für das Automatgetriebe bzw. andere hydraulisch betätigte Baugruppen im Antriebsstrang tragen.

Weitere Vorteile und Weiterbildungen der Erfindung ergeben sich aus den Unteransprüchen und aus den nachfolgend anhand der Zeichnung prinzipmäßig beschriebenen Ausführungsbeispielen.

### Kurzbeschreibung der Zeichnungen

Fig.1 zeigt eine schematische Darstellung eines parallelen Hybrid-Antriebes für ein Kraftfahrzeug.

Fig. 2 eine zeigt schematische Darstellung eines seriellen Hybrid-Antriebes für ein Kraftfahrzeug.

Fig. 3 eine zeigt schematische Teil-Darstellung eines erfindungsgemäßen Hybrid-Antriebes im Längsschnitt in einer ersten Ausführungsform.

Fig. 4 eine zeigt schematische Teil-Darstellung eines erfindungsgemäßen Hybrid-Antriebes im Längsschnitt in einer zweiten Ausführungsform.

### Detaillierte Beschreibung derzeit bevorzugter Ausführungsformen

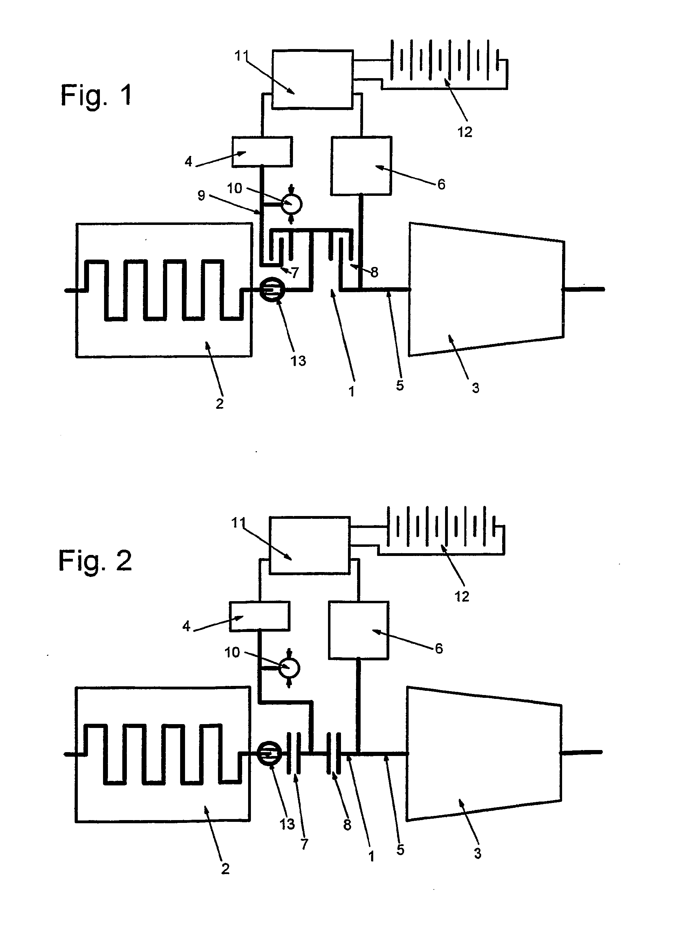

In Fig. 1 und 2 ist schematisch ein Hybrid-Antrieb für ein Kraftfahrzeug mit einem Antriebsstrang 1 dargestellt, welcher zwischen einem Verbrennungsmotor 2 und einem mehrgängigem Fahrzeuggetriebe 3 in Gestalt eines Automatgetriebes, eine erste elektrische Maschine 4 und eine mit einer Getriebeeingangswelle 5 direkt und permanent verbundene zweite elektrische Maschine 6 aufweist. Zwischen den elektrischen Maschinen 4 und 6, welche jeweils als Motor und als Generator betreibbar sind, und dem Verbrennungsmotor 2 ist jeweils eine schaltbare Kupplung 7 bzw. 8 angeordnet.

In der Ausführung nach Fig. 1 ist die erste schaltbare Kupplung 7 und die erste elektrische Maschine 4 in einem von dem Antriebsstrang 1 zwischen dem Verbrennungsmotor 2 und der zweiten schaltbaren Kupplung 8 abzweigenden, parallelen Seitenstrang 9 angeordnet und bildet einen parallelen Hybrid-Antrieb. Die erste elektrische Maschine 4 ist somit durch die erste Kupplung 7 und die zweite elektrische Maschine 6 ist durch die zweite Kupplung 8 von dem Verbrennungsmotor 2 getrennt bzw. zu verbinden.

Bei der einen seriellen Hybrid-Antrieb darstellenden Ausführungsform nach Fig. 2 sind in dem Antriebsstrang 1 vom Verbrennungsmotor 2 abwärts in Richtung des Fahrzeuggetriebes 3 die erste schaltbare Kupplung 7 und die erste elektrische Maschine 4, und nachfolgend die zweite schaltbare Kupplung 8 und die zweite elektrische Maschine 6 in Reihe geschaltet.

In beiden Ausführungen ist die erste elektrische Maschine 4 zum Starten des Verbrennungsmotors 2 vorgesehen. Hierbei wird dann die erste Kupplung 7 geschlossen oder rutscht. Prinzipiell kann die Starterfunktion jedoch von beiden elektrischen Maschinen 4 und 6 wahrgenommen werden.

Die zweite elektrische Maschine 6 dient in erster Linie zum elektrischen Anfahren bei abgekoppeltem Verbrennungsmotor 2. Das Anfahren ist aber auch mit der zweiten elektrischen Maschine 6 und zugeschaltetem laufenden Verbrennungsmotor 2 möglich. Hierzu wird die zweite Kupplung 8 in rutschenden Zustand geschaltet.

In beiden gezeigten Ausführungsformen ist die erste elektrische Maschine 4 direkt mit einer Hydraulikpumpe 10 des Automatgetriebes 3 verbunden. Die Hydraulikpumpe 10 ist zwischen der ersten schaltbaren Kupplung 7 und der ersten elektrischen Maschine 4 angeordnet. Sie wird elektrisch mit der ersten elektrischen Maschine 4 oder mechanisch mit dem Verbrennungsmotor 2 über die geschlossene erste Kupplung 7 angetrieben.

Wie den Fig. 1 und 2 zu entnehmen ist, sind die elektrischen Maschinen 4, 6 über eine elektronische Leistungsansteuerung 11 elektrisch miteinander und mit einer elektrischen Energiequelle 12 in Gestalt einer wiederaufladbaren Batterie verbunden.

Die erste elektrische Maschine 4 ist mit Strom aus der Batterie 12 oder über die Leistungselektronik 11 mit Strom von der zweiten elektrischen Maschine 6 betreibbar. In letzterem Fall arbeitet die zweite elektrische Maschine 6 als Generator und die zweite Kupplung 8 wird in offenen oder schlupfenden Zustand geschaltet.

Alternativ hierzu kann auch die erste elektrische Maschine 4 als Generator betrieben werden, wobei die zweite Kupplung 8 in geschlossenen oder schlupfenden Zustand geschaltet ist.

Zwischen die Ausgangswelle des Verbrennungsmotors 2 und die erste Kupplung 7 ist ein Torsionsschwingungsdämpfer 13 zum Schutz des Antriebsstrangs 1 vor Drehungleichförmigkeiten geschaltet.

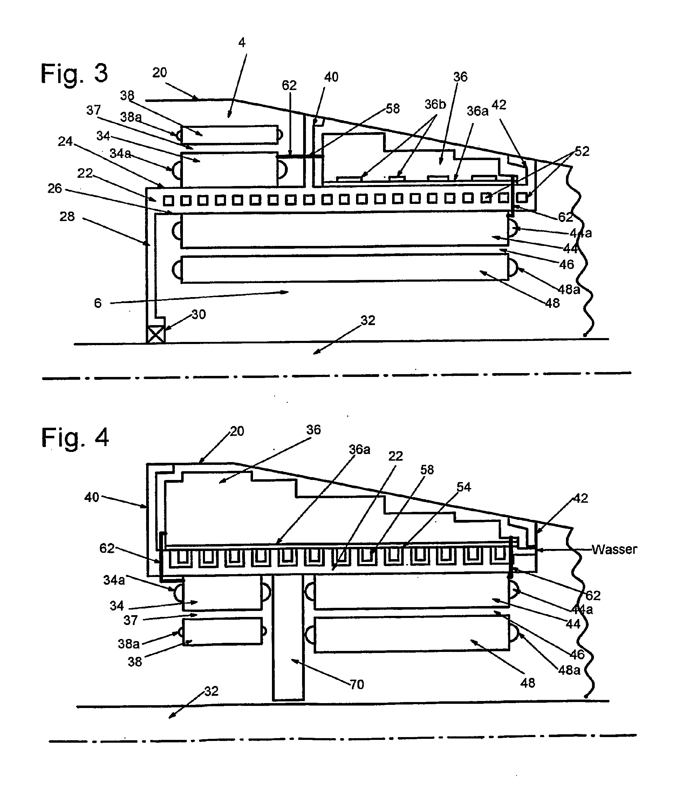

In Fig. 3 ist veranschaulicht, wie die beiden elektrischen Maschinen 4, 6 in einem gemeinsamen Gehäuse 20 angeordnet sind, das eine im wesentlichen konisch rohrförmige Gestalt aufweist. In dieses Gehäuse 20 ist ein im Querschnitt rundes Aluminium-Druckguss-Rohr als Träger 22 eingeschoben, dessen Innenwand 24 kreisrund und dessen Aussenwand 26 polygonalen Querschnitt hat. An seinem vorderen (in Fig. 3 linken) Ende hat der Träger 22 einen radial nach innen reichenden Stützflansch 28, der über ein Lager 30 sich auf einer Welle 32 abstützt. Auf seiner Aussenwand 26 ist auf das vordere Ende des Trägers 22 ein Stator 34 mit angedeuteten Statorwicklungen 34a der ersten elektrischen Maschine 4 drehfest aufgebracht. Durch einen Luftspalt 37 getrennt rotiert ein Läufer 38 mit ebenfalls angedeuteten Läuferwicklungen 38a um den Stator 34 der ersten elektrischen Maschine 4. Die Abtriebsseite des Läufers 38 zur ersten Kupplung 7 ist hier nicht weiter veranschaulicht.

An der vom vorderen Ende abgewandten Seite der ersten elektrische Maschine 4 reicht von der Aussenwand 26 des Trägers 22 radial nach aussen ein weiterer (zweiter) Stützflansch 40, der an der Innenwand des Gehäuses 20 befestigt ist. Am hinteren Ende des Trägers 22 ist ein dritter Stützflansch 42 angeformt, der ebenfalls radial nach aussen bis zur Innenwand des Gehäuses 20 reicht und dort befestigt ist.

An der Innenwand 24 des Trägers 22 ist praktisch über dessen gesamte Länge die zweite elektrische Maschine 6 aufgenommen. Der Stator 44 der zweiten elektrischen Maschine 6 mit angedeuteten Statorwicklungen 44a ist an der Innenwand 24 des Trägers 22 drehfest angebracht. Durch einen Luftspalt 46 getrennt rotiert ein Läufer 48 mit ebenfalls angedeuteten Läuferwicklungen 48a um den Stator 44 der zweiten elektrischen Maschine 6. Die Abtriebsseite des Läufers 48 zur zweiten Kupplung 8 ist hier nicht weiter veranschaulicht.

Zwischen dem zweiten und dem dritten Stützflansch 40 und 42 ist an der Aussenwand 26 des Trägers 22 die elektronische Leistungsansteuerung mit mehreren Modulen 36 entlang des Umfangs verteilt angeordnet. Die Statorwicklungen 34a, 44a der elektischen Maschinen sind über Leitungen 58 mit den Modulen 36 der elektronischen Leistungsansteuerung verbunden.

In dem Träger 22 sind Kühlkanäle 52 ausgeformt, in denen Wasser oder Öl zirkuliert, das die von den elektrischen Maschinen 4, 6 insbesondere deren Statoren 34, sowie von den Modulen 36 abgegebene Wärmeenergie in einem nicht weiter veranschaulichten Wärmetauscher an die Umgebung abgibt.

In der in Fig. 3 gezeigten Ausführungsform haben die Kühlkanäle 52 eine im wesentlichen konzentrische oder schraubenförmige Leitungsführung und sind zur Aussenwand 26 des Trägers 22 hin geschlossen. Die thermische Ankopplung zwischen den Modulen 36 der elektronische Leistungsansteuerung und dem Träger 22 erfolgt hier durch elektrisch isolierte aber thermisch leitende, ebene Bodenplatten 36a der Module 36.

Der Träger 22 hat in seiner in Fig. 4 gezeigten Ausgestaltung an seiner polygonalen Aussenwand 26 mit ebenen Flächenabschnitten mehrere Öffnungen 54, durch die jeweils Kühlelemente 58 der Module 36 einer elektronische Leistungsansteuerung ragen. Die Kühlelemente 58 sind so gestaltet, dass sie in dem in den Fluidkanälen 32 strömenden Wasser oder Öl turbulente Strömungen zur Verbesserung der Wärmeabfuhr aus den Modulen 36 der elektronischen Leistungsansteuerung und aus den elektrischen Maschinen 4, 6 hervorrufen.

Im Übrigen unterscheiden sich die Ausführungsformen der beiden Fig. 3 und 4 dadurch, dass bei Fig. 4 an der Aussenwand des Trägers 22 eine elektrische Maschine als Aussenläufer und die elektronische Leistungsansteuerung angeordnet sind, während an der Innenwand des Trägers 22 die andere elektrische Maschine als Innenläufer angeordnet ist. Demgegenüber ist bei Fig. 4 nur die elektronische Leistungsansteuerung an der Aussenwand des Trägers angeordnet und beide elektrischen Maschinen sind als Innenläufer an der Innenwand des Trägers angeordnet. Ausserdem ist in Fig. 4 noch gezeigt, wie eine hydraulische Verteilerplatte 70 zwischen den beiden elektrischen Maschinen (oder auch an einer der aussenliegenden Stirnseiten der jeweiligen Maschinen) an der Innenwand 26 des Trägers 22 radial nach innen reichen kann. Die hydraulische Verteilerplatte 70 kann damit ggf. die Funktion des ersten, radial nach innen ragenden Stützflansches 28 mit übernehmen.

Die Module 36 der elektronischen Leistungsansteuerung haben eine im wesentlichen dem vorhandenen Raum angepasste Gestalt und weisen Leistungshalbleiter 36b enthaltende Elektronik auf. Dabei sind die Verlustwärme erzeugenden Leistungshalbleiter 36b mit den Kühlelementen 58 thermisch gekoppelt.

Die Bodenplatten 36a der Module 36 und die Kühlelemente 58 sind aus Kupfer oder Aluminium enthaltendem Material, aus Aluminiumoxid, Aluminiumnitrid oder Siliziumkarbid gebildet.

Schließlich sei bemerkt, daß die Zeichnungen nur zur prinzipiellen Darstellung und der Erläuterung der Erfindung dienen; die tatsächlichen Abmessungen und Proportionen von Ausführungsformen der Erfindung können davon abweichen.

## Patentansprüche

1. Hybrid-Antrieb für ein Kraftfahrzeug mit einem Antriebsstrang (1), mit
- einem Verbrennungsmotor (2) und einem Fahrzeuggetriebe (3) mit veränderbarer Übersetzung und
- einer ersten und einer zweiten, sowohl als Motor als auch als Generator betreibbaren elektrischen Maschine (4, 6), die jeweils einen Stator (34, 44) und einen Rotor (38, 48) aufweisen, wobei
- die zweite elektrische Maschine (6) mit einem Eingang (5) des Fahrzeuggetriebes (3) in permanentem Kraftschluß steht,
- zwischen den elektrischen Maschinen (4, 6) und der Antriebswelle des Verbrennungsmotor (2) jeweils eine schaltbare Kupplung (7, 8) angeordnet ist, und wobei
- die elektrischen Maschinen (4, 6) über eine elektronische Leistungsansteuerung (11) miteinander oder mit einer elektrischen Energiequelle (12) zu verbinden sind, wobei
- die beiden elektrischen Maschinen (4, 6) in einem gemeinsamen Gehäuse (20) anzuordnen sind, **dadurch gekennzeichnet, dass**
- beide Statoren (34, 44) der elektrischen Maschinen (4, 6) und die elektronische Leistungsansteuerung (11) auf einem gemeinsamen Träger (22) aufgenommen ist, der eine zum Kühlen der Statoren (34, 44) und der elektronischen Leistungsansteuerung (11) dienende Kühleinrichtung (52) aufweist.

2. Hybrid-Antrieb für ein Kraftfahrzeug nach Anspruch 1, **dadurch gekennzeichnet, dass**
- der Träger (22) einen im wesentlichen hohlzylindrischen Abschnitt hat, wobei an seiner Innenwand (24) der eine Stator und an seiner Außenwand (26) der andere Stator angeordnet sind.

3. Hybrid-Antrieb für ein Kraftfahrzeug nach einem der Ansprüche 1 oder 2, **dadurch gekennzeichnet, dass**
- an dem gemeinsamen Träger (22) beide Statoren entweder an seiner Innenwand oder an seiner Außenwand angeordnet sind.

4. Hybrid-Antrieb für ein Kraftfahrzeug nach einem der Ansprüche 1 bis 3, **dadurch gekennzeichnet, dass**
- der hohlzylindrische Abschnitt des Trägers (22) einen im wesentlichen kreisringförmigen oder polygonringförmigen Querschnitt aufweist.

5. Hybrid-Antrieb für ein Kraftfahrzeug nach einem der Ansprüche 1 bis 4, **dadurch gekennzeichnet, dass**
- der Träger (22) an seiner Innenwand (24) und/oder seiner Aussenwand (26) eine Hydraulik-Verteilerplatte (70) trägt.

6. Hybrid-Antrieb für ein Kraftfahrzeug nach einem der Ansprüche 1 bis 5, **dadurch gekennzeichnet, dass**
- in dem Antriebsstrang (1) zwischen dem Verbrennungsmotor (2) und dem Fahrzeuggetriebe (3) die erste schaltbare Kupplung (7) und die erste elektrische Maschine (4), und die zweite schaltbare Kupplung (8) und die zweite elektrische Maschine (6) in Reihe angeordnet sind.

7. Hybrid-Antrieb für ein Kraftfahrzeug nach einem der Ansprüche 1 bis 6, **dadurch gekennzeichnet, dass**
- die erste schaltbare Kupplung (7) und die erste elektrische Maschine (4) in einem von dem Antriebsstrang (1) zwischen dem Verbrennungsmotor (2) und der zweiten schaltbaren Kupplung (8) abzweigenden, parallelen Seitenstrang (9) derart angeordnet sind, daß die erste elektrische Maschine (4) durch die erste Kupplung (7) und die zweite elektrische Maschine (6) durch die zweite Kupplung (8) von dem Verbrennungsmotor (2) trennbar sind.

8. Hybrid-Antrieb für ein Kraftfahrzeug nach einem der Ansprüche 1 bis 7, **dadurch gekennzeichnet, dass**
- die erste elektrische Maschine (4) mit einer Hydraulikpumpe (10) des Fahrzeuggetriebes (3) verbunden ist.

9. Hybrid-Antrieb für ein Kraftfahrzeug nach einem der Ansprüche 1 bis 7, **dadurch gekennzeichnet, dass**
- die erste elektrische Maschine (4) mit einem oder mehreren Nebenaggregaten des Kraftfahrzeuges zu deren Antrieb verbunden ist.

10. Hybrid-Antrieb für ein Kraftfahrzeug nach einem der Ansprüche 1 bis 9, **dadurch gekennzeichnet, dass**
- die zweite elektrische Maschine (6) eine größere elektrische Leistung als die erste elektrische Maschine (4) aufnimmt/abgibt.

11. Hybrid-Antrieb für ein Kraftfahrzeug nach einem der Ansprüche 1 bis 10, **dadurch gekennzeichnet, dass**
- das Fahrzeuggetriebe ein Automatgetriebe (3) ist.

12. Hybrid-Antrieb für ein Kraftfahrzeug nach einem der Ansprüche 1 bis 11, **dadurch gekennzeichnet, dass**
- die elektronische Leistungsansteuerung (11) in mehrere Module (36) aufgeteilt ist, die jeweils mit wenigstens einer der Stator- und/oder Rotorspulen (22, 24) elektrisch verbunden sind, wobei die Module (36) am Umfang der elektrischen Maschine verteilt angeordnet und mit der Kühleinrichtung des Trägers (22) wärmeleitend gekoppelt sind.

13. Hybrid-Antrieb für ein Kraftfahrzeug nach einem der Ansprüche 1 bis 12, **dadurch gekennzeichnet, dass**
- die Module (36) der elektronischen Leistungsansteuerung (11) an der Kühleinrichtung radial aussenliegend angeordnet sind.

14. Hybrid-Antrieb für ein Kraftfahrzeug nach einem der Ansprüche 1 bis 13, **dadurch gekennzeichnet, dass**
- die Kühleinrichtung durch den Träger (22) durchziehende Fluidkanäle (32) gebildet ist.

15. Hybrid-Antrieb für ein Kraftfahrzeug nach einem der Ansprüche 1 bis 14, **dadurch gekennzeichnet, dass**
- der Träger (22) wenigstens eine Öffnung (54) zu wenigstens einem der Fluidkanäle (52) aufweist, in die an einem der Module (36) der elektronischen Leistungsansteuerung angeordnete Kühlelemente (58) hineinragen.

16. Hybrid-Antrieb für ein Kraftfahrzeug nach dem vorhergehenden Anspruch, **dadurch gekennzeichnet, dass**
- die in die Fluidkanäle (52) hineinragenden Kühlelemente (58) und/oder die Wände der Fluidkanäle (52) so gestaltet sind, dass sie in dem in den Fluidkanälen (52) strömenden Fluid turbulente Strömungen verursachen.

## Claims

1. A hybrid drive for a motor vehicle with a drive train (1), comprising
- a combustion engine (2) and a vehicle transmission (3) with variable gear ratio and
- a first and a second electrical machine (4, 6) which can be operated both as a motor and a generator, each of which comprises a stator (34, 44) and a rotor (38, 48), with
- the second electrical machine (6) being in permanent nonpositive connection with an input (5) of the vehicle transmission (3),
- a shiftable clutch (7, 8) each being arranged between the electrical machines (4, 6) and the drive shaft of the combustion engine (2), and with
- the electrical machines (4, 6) having to be connected with each other or with an electrical energy source (12) via an electronic power actuation control (11), with
- the two electrical machines (4, 6) having to be arranged in a common housing (20),
**characterised in that**
- both stators (34, 44) of the electrical machines (4, 6) and the electronic power actuation control (11) are accommodated on a common carrier (22) that comprises cooling means (52) serving for cooling the stators (34, 44) and the electronic power actuation control (11).

2. Hybrid drive for a motor vehicle according to Claim 1, **characterised in that**
- the carrier (22) has an essentially hollow cylindrical portion, with the one stator being arranged at its inner wall (24) and the other stator being arranged at its outer wall (26).

3. Hybrid drive for a motor vehicle according to one of Claims 1 or 2, **characterised in that**
- both stators are arranged either at the inner wall or at the outer wall of the common carrier (22).

4. Hybrid drive for a motor vehicle according to one of Claims 1 to 3, **characterised in that**
- the hollow cylindrical portion of the carrier (22) has an essentially circular or polygonal ring-shaped cross section.

5. Hybrid drive for a motor vehicle according to one of Claims 1 to 4, **characterised in that**
- the carrier (22) accommodates a hydraulic manifold plate (70) at its inner wall (24) and/or its outer wall (26).

6. Hybrid drive for a motor vehicle according to one of Claims 1 to 5, **characterised in that**
- the first shiftable clutch (7) and the first electrical machine (4) and the second shiftable clutch (8) and the second electrical machine (6) are arranged in series in the drive train (1) between the combustion engine (2) and the vehicle transmission (3).

7. Hybrid drive for a motor vehicle according to one of Claims 1 to 6, **characterised in that**
- the first shiftable clutch (7) and the first electrical machine (4) are arranged in a parallel side train (9) branching off the drive train (1) between the combustion engine (2) and the second shiftable clutch (8) in such a manner, that the first electrical machine (4) can be disengaged from the combustion engine (2) by the first clutch (7) and the second electrical machine (6) by the second clutch (8).

8. Hybrid drive for a motor vehicle according to one of Claims 1 to 7, **characterised in that**
- the first electrical machine (4) is connected with a hydraulic pump (10) of the vehicle transmission (3).

9. Hybrid drive for a motor vehicle according to one of Claims 1 to 7, **characterised in that**
- the first electrical machine (4) is connected with one or several auxiliary units of the motor vehicle for driving same.

10. Hybrid drive for a motor vehicle according to one of Claims 1 to 9, **characterised in that**
- the second electrical machine (6) has a higher power consumption/output than the first electrical machine (4).

11. Hybrid drive for a motor vehicle according to one of Claims 1 to 10, **characterised in that**
- the vehicle transmission is an automatic transmission (3).

12. Hybrid drive for a motor vehicle according to one of Claims 1 to 11, **characterised in that**
- the electronic power actuation control (11) is divided into several modules (36) each of which is electrically connected with at least one of the stator and/or rotor coils (22, 24), the modules (36) being arranged distributed on the circumference of the electrical machine and coupled with the cooling means of the carrier (22) in a thermally conductive manner.

13. Hybrid drive for a motor vehicle according to one of Claims 1 to 12, **characterised in that**
- the modules (36) of the electronic power actuation control (11) are disposed on the cooling means so as to be located radially on the outside.

14. Hybrid drive for a motor vehicle according to one of Claims 1 to 13, **characterised in that**
- fluid channels (32) crisscrossing the carrier (22) form the cooling means.

15. Hybrid drive for a motor vehicle according to one of Claims 1 to 14, **characterised in that**
- the carrier (22) comprises at least one opening (54) to at least one of the fluid channels (52), into which cooling elements (58) disposed at one of the modules (36) of the electronic control circuit protrude.

16. Hybrid drive for a motor vehicle according to one of the previous claims, **characterised in that**
- the cooling elements (58) protruding into the fluid channels (52) and/or the walls of the fluid channels (52) are designed in such a manner that they cause turbulent currents in the fluid flowing in the fluid channels (52).

## Revendications

1. Système de propulsion hybride pour véhicule automobile, équipé d'une ligne de transmission (1) comprenant
- un moteur à combustion (2) et une boîte de vitesses (3) à rapports variables ainsi que
- une première et une seconde machine électrique (4, 6) pouvant fonctionner aussi bien comme moteur que comme générateur et présentant chacune un stator (34, 44) et un rotor (38, 48),
- la seconde machine électrique (6) étant reliée par liaison de force permanente à une entrée (5) de la boîte de vitesses (3),
- un embrayage couplable (7, 8) étant disposé entre chacune des machines électriques (4, 6) et l'arbre d'entraînement du moteur à combustion (2), et
- les machines électriques (4, 6) devant être reliées l'une à l'autre ou à une source d'énergie électrique (12) par l'intermédiaire d'une commande de puissance électronique (11),
- les deux machines électriques (4, 6) devant être disposées dans un carter commun (20), **caractérisé en ce que**
- les deux stators (34, 44) des machines électriques (4, 6) et la commande de puissance électronique (11) sont logés sur un support commun (22) présentant un dispositif de refroidissement (52) servant au refroidissement des stators (34, 44) et de la commande de puissance électronique (11).

2. Système de propulsion hybride pour véhicule automobile selon la revendication 1, **caractérisé en ce que**
- le support (22) possède un segment pour l'essentiel cylindrique creux, un stator étant disposé sur sa paroi intérieure (24), et l'autre stator, sur sa paroi extérieure (26).

3. Système de propulsion hybride pour véhicule automobile selon l'une des revendications 1
ou 2, **caractérisé en ce que**
- les deux stators sont disposés soit sur la paroi intérieure soit sur la paroi extérieure du support commun (22).

4. Système de propulsion hybride pour véhicule automobile selon l'une des revendications 1 à 3, **caractérisé en ce que**
- le segment cylindrique creux du support (22) présente une section pour l'essentiel annulaire circulaire ou annulaire polygonale.

5. Système de propulsion hybride pour véhicule automobile selon l'une des revendications 1 à 4, **caractérisé en ce que**
- le support (22) porte sur sa paroi intérieure (24) et/ou sur sa paroi extérieure (26) une plaque de distribution hydraulique (70).

6. Système de propulsion hybride pour véhicule automobile selon l'une des revendications 1 à 5, **caractérisé en ce que**
- le premier embrayage couplable (7) et la première machine électrique (4), et le second embrayage couplable (8) et la seconde machine électrique (6) sont montés en série dans la ligne de transmission (1) entre le moteur à combustion (2) et la boîte de vitesses (3).

7. Système de propulsion hybride pour véhicule automobile selon l'une des revendications 1 à 6, **caractérisé en ce que**
- le premier embrayage couplable (7) et la première machine électrique (4) sont disposés de telle sorte dans une ligne latérale parallèle (9) divergente de la ligne de transmission (1) entre le moteur à combustion (2) et le second embrayage couplable (8) que la première machine électrique (4) peut être séparée par le premier embrayage (7), et la seconde machine électrique (6) par le second embrayage (8) du moteur à combustion (2).

8. Système de propulsion hybride pour véhicule automobile selon l'une des revendications 1 à 7, **caractérisé en ce que**
- la première machine électrique (4) est reliée à une pompe hydraulique (10) de la boîte de vitesses (3).

9. Système de propulsion hybride pour véhicule automobile selon l'une des revendications 1 à 7, **caractérisé en ce que**
- la première machine électrique (4) est reliée à un ou à plusieurs sous-groupes du véhicule automobile pour l'entraînement de ce dernier.

10. Système de propulsion hybride pour véhicule automobile selon l'une des revendications 1 à 9, **caractérisé en ce que**
- la seconde machine électrique (6) absorbe/cède une plus grande puissance électrique que la première machine électrique (4).

11. Système de propulsion hybride pour véhicule automobile selon l'une des revendications 1 à 10, **caractérisé en ce que**
- la boîte de vitesses est une boîte de vitesses automatique (3).

12. Système de propulsion hybride pour véhicule automobile selon l'une des revendications 1 à 11, **caractérisé en ce que**
- la commande de puissance électronique (11) est répartie entre plusieurs modules (36) qui sont chacun reliés électriquement à au moins une des bobines du stator et/ou du rotor (22, 24), lesdits modules (36) étant disposés répartis sur la conférence de la machine électrique et couplés de façon thermoconductible au dispositif de refroidissement du support (22).

13. Système de propulsion hybride pour véhicule automobile selon l'une des revendications 1 à 12, **caractérisé en ce que**
- les modules (36) de la commande de puissance électronique (11) sont disposés radialement à l'extérieur sur le dispositif de refroidissement.

14. Système de propulsion hybride pour véhicule automobile selon l'une des revendications 1 à 13, **caractérisé en ce que**
- le dispositif de refroidissement est formé par des canaux fluidiques (32) traversant le support (22).

15. Système de propulsion hybride pour véhicule automobile selon l'une des revendications 1 à 14, **caractérisé en ce que**
- le support (22) présente au moins une ouverture (54) vers au moins un des canaux fluidiques (52) dans lesquels font saillie des éléments de refroidissement (58) disposés sur un des modules (36) de la commande de puissance électronique.

16. Système de propulsion hybride pour véhicule automobile selon la revendication précédente, **caractérisé en ce que**
- les éléments de refroidissement (58) faisant saillie dans les canaux fluidiques (52) et/ou les parois des canaux fluidiques (52) sont conçus de sorte qu'ils engendrent des courants turbulents dans le fluide circulant dans les canaux fluidiques (52).
